# EUROPEAN PATENT APPLICATION

(11) **EP 4 787 112 A1**
(43) Date of publication of application: **05.08.2026**
(21) Application number: 25216162.5
(22) Date of filing: 17.11.2025
(51) Int. Cl.: G05D 1/648

(54) **GRASS MOWING VEHICLE AND METHOD PERFORMED BY SUCH**

(30) Priority: 31.01.2025 US 202519042848
(71) Applicant: Deere & Company, Moline, IL 61265 (US)
(72) Inventor: CARNAHAN, Bryce A, 68163 Mannheim (DE); ANDERSON, David L, 68163 Mannheim (DE)
(74) Representative: Reichert, Christian

(57) **Abstract**

A grass mowing vehicle (100) is disclosed. The grass mowing vehicle (100) comprising: a plurality of ground engaging traction elements (108, 110) moveable to carry the grass mowing vehicle (100) across a worksite (600); one or more cutting units (104, 106) configured to cut grass at the worksite (600); and a control system (205) configured to: generate (832) a path plan (360) for a mowing operation of a plurality of separate mowing areas (604) of a worksite (600), the path plan (360) including a set of respective swaths (606, 608, 610) corresponding to each separate mowing area (604), wherein a subset of swaths (606-1/606-2, 608-1) of a first set of respective swaths (606, 608, 610) are aligned with a subset of swaths (606-2/606-3, 608-2) of a second set of respective swaths (606, 608, 610); and automatically control (836) the grass mowing vehicle (100) based, at least, on the path plan (360). Furthermore, a method performed by such a grass mowing vehicle (100) is disclosed.

## Description

### FIELD OF THE DESCRIPTION

The present description relates to grass mowing vehicles, and more specifically to path planning for grass mowing vehicles.

### BACKGROUND

There are a wide variety of different types of grass mowing vehicles used to mow golf courses, parks, athletic fields, and lawns. Grass mowing vehicles can include functionality for automatically controlling travel path and other operating settings of the grass mowing vehicles during a mowing operation. A path planner can be used to generate a path plan for a grass mowing vehicle that can include a route, including swaths (cutting passes) connected by turns, as well as other prescriptive operating settings along the route.

The discussion above is merely provided for general background information and is not intended to be used as an aid in determining the scope of the claimed subject matter.

### SUMMARY

A grass mowing vehicle includes a plurality of ground engaging traction elements moveable to carry the grass mowing vehicle across a worksite and one or more cutting units configured to cut grass at the worksite. The grass mowing vehicle further includes a control system configured to: generate a path plan for a mowing operation of a plurality of separate mowing areas of a worksite, the path plan including a set of respective swaths corresponding to each separate mowing area, wherein a subset of swaths of a first set of respective swaths are aligned with a subset of swaths of a second set of respective swaths; and automatically control the grass mowing vehicle based, at least, on the path plan.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial schematic illustration showing an example grass mowing machine.
FIG. 2 is a block diagram of one example grass mowing system architecture.
FIG. 3 is a block diagram showing some examples of components of the grass mowing system architecture, including path planning system, in more detail.
FIG. 4 is a pictorial illustration showing one example path planning operation for a worksite.
FIGS. 5A and 5B (collectively referred to herein as FIG. 5) are pictorial illustrations showing one example path planning operation for a worksite.
FIG. 6 is a flowchart showing example operation of the grass mowing system architecture in performing path planning and grass mowing vehicle control.
FIG. 7 is a block diagram showing one example of items of a grass mowing system architecture in communication with a remote server architecture.
FIGS. 8, 9, and 10 show examples of mobile devices that can be used in a grass mowing system architecture.
FIG. 11 is a block diagram showing one example of a computing environment that can be used in a grass mowing system architecture.

### DETAILED DESCRIPTION

In grass mowing operations, particularly commercial grass mowing operations, such as mowing golf courses, parks, and athletic fields, a high quality of cut is desired. In such applications, it may be desired, or even required, to ensure that grass is at uniform height or cut in certain patterns. Current grass mowing vehicles include automation functionality for automatically controlling travel path and other operating settings of the grass mowing vehicle during the mowing operation. A path planner can be used to generate a path plan that includes a route, including swaths (cutting passes or paths), turns, and non-cutting paths, as well as other prescriptive operating settings along the route. The path plan can be used in automatically controlling the grass mowing vehicle.

Certain worksites include separate mowing areas (areas to be mowed) that are separated from one another (e.g., interposed by some other portion of the worksite, such as a non-mowing area or an area to be mowed in a different way than the mowing area). For example, a golf course can include, as separate mowing areas, separate holes that are separated from one another. Additionally, a singular hole of a golf course can include, as separate mowing areas, separate portions of a fairway (referred to as a split fairway) that are separated from one another. It can be desirable to align swaths in one mowing area with swaths in a separate mowing area such that the mowing areas, though separated, appear as if they were mowed as a singular unit. For example, it may be desirable to align swaths in one or more of swath angle, swath cut pattern or swath cut direction (direction the mower is traveling when cutting), and swath width. This can increase the aesthetic appeal of the worksite and may make the worksite more appealing for commercial activities.

However, separate mowing areas are often differently shaped, sized, and are not perfectly aligned with one another. Current path planning systems generate path plans for each mowing area based on the local shape reference for the particular mowing area and thus, swaths from one mowing area will not align with swaths of other separate mowing areas.

Disclosed herein are systems and methods that provide for generating path plans that align swaths across separate mowing areas. The systems and methods include a path planner and path planning that generate path plans that align swaths across separate mowing areas. The systems and methods obtain vehicle data (e.g., dimensions of the grass mowing vehicles, such as cutting width), worksite data (e.g., map of the worksite), and operation data (e.g., swath angle, cut pattern (e.g., swath cut direction pattern), overlap, etc.). The systems and methods further identify (e.g., obtain, calculate, etc.) an origin (e.g., XY map origin, geographical center, other global reference point within the worksite map). The systems and methods then generate path plans that align swaths across separate mowing areas of the worksite based on the obtained vehicle, worksite, and operation data and the identified origin. In some examples, the system and methods further identify remainder areas of the mowing areas and generate remainder swaths to provide coverage of the remainder areas based on a remainder swath threshold.

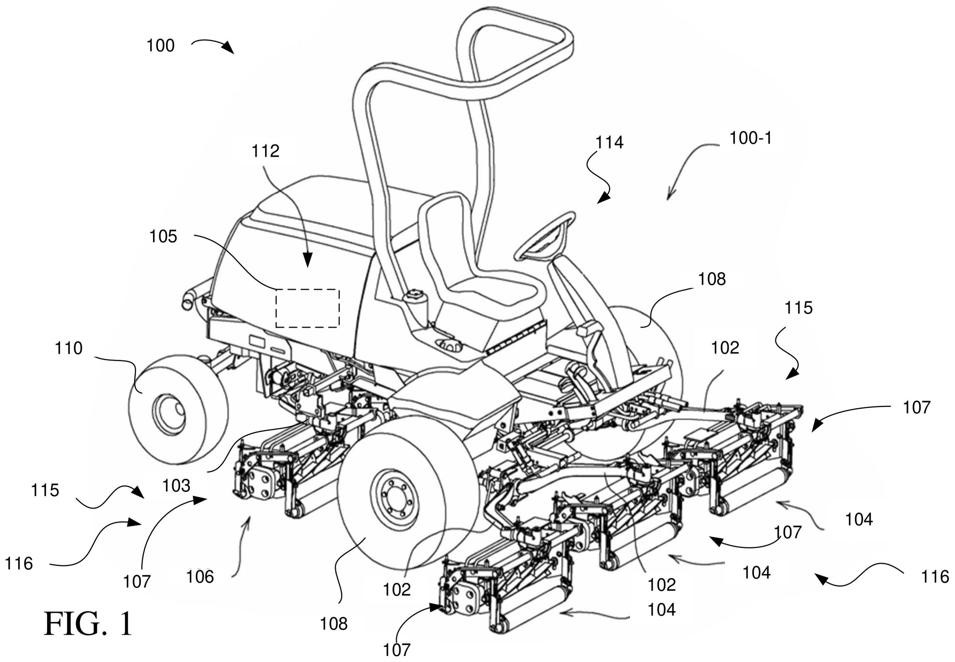

FIG. 1 is partial pictorial, partial schematic illustration of an example grass mowing vehicle 100. In the example shown in FIG. 1, grass mowing vehicle 100 is a fairway mowing vehicle 100-1. Fairway mowing vehicle 100-1 includes a plurality of front cutting units 104 and one or more rear cutting units 106. The orientation (e.g., height, tilt, roll, etc.) of front cutting units 104 and rear cutting units 106 may be controllably set and adjusted by virtue of a moveable support apparatuses, illustratively shown as 102 and 103. Cutting units 104 and 106 are operable to engage and cut grass at worksites. Cutting units 104 and 106 include cutting functionality 107, such as mowing blades that engage and cut grass. Fairway mowing vehicle 100-1 further includes left and right drive wheels 108 and steerable left and right rear wheels 110.

Fairway mowing vehicle 100-1 includes a number of controllable subsystems, some of which are shown in FIG. 1. As illustrated, fairway mowing vehicle 100-1 includes a propulsion subsystem, indicated generally by arrow 112, a steering subsystem, indicated generally by arrow 114, a cutting unit orientation subsystem, indicated generally by arrows 115, and a cutting unit actuation subsystem, indicated generally by arrows 116.

Propulsion subsystem 112 includes a powerplant (e.g., internal combustion engine, batteries, hybrid (combustion engine and batteries), etc.) as well as other drivetrain elements (e.g., gearbox, axles, brakes, actuators (e.g., electric motors, etc.). In one particular example, propulsion subsystem 112 includes an electric motor for each of left and right drive wheels 108 used to drive left and right drive wheels 108. The electric motors are powered by on-board batteries which can be charged by an internal combustion engine or by another source.

Steering subsystem 114 includes one or more actuators (e.g., linear actuators, hydraulic actuators, etc.) and linkages used to change orientation (e.g., turn angle) of steerable left and right rear wheel 110 to change a heading of fairway mowing vehicle 100-1.

Cutting unit orientation subsystem 115 includes one or more controllable actuators, such as hydraulic actuators (e.g., hydraulic cylinders), linear actuators, pneumatic actuators, or various other types of actuators that are controllable to change orientation (height, tilt, roll, etc.) of cutting units 104 and 106, such as by actuating movement of moveable support apparatuses 102 and 103.

Cutting unit actuation subsystem 116 includes one or more controllable actuators (e.g., motors, etc.) that are controllable to controllably actuate movement of cutting functionality 107 of cutting units 104 and 106. Cutting unit actuation subsystem 116 is operable to initiate and terminate movement (e.g., rotation) of cutting functionality 107 as well as control a speed of movement (e.g., speed of rotation) of cutting functionality 107.

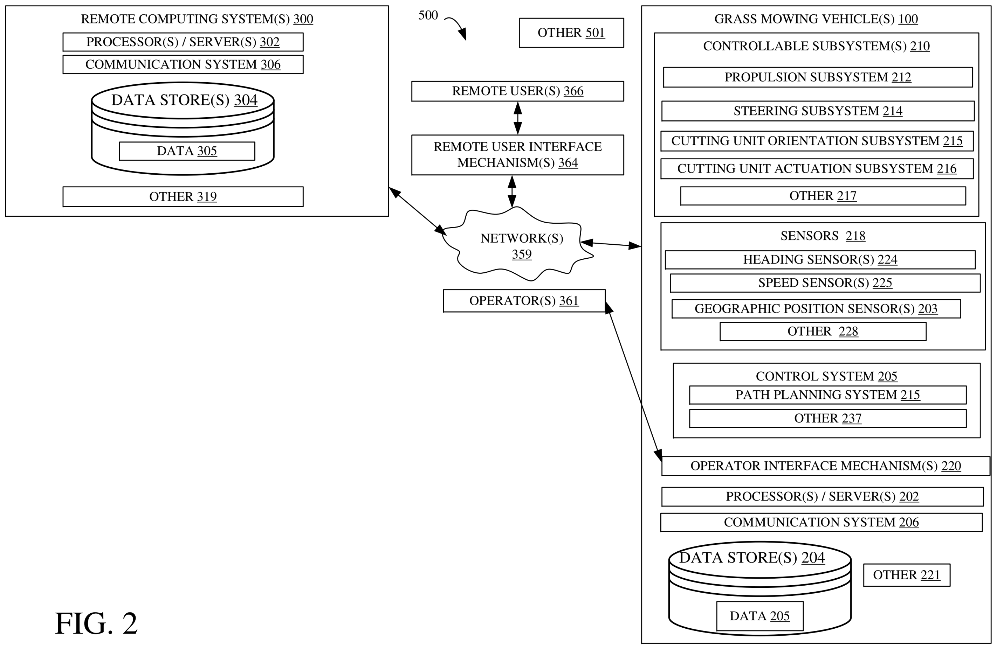

As illustrated in FIG. 1, fairway mowing vehicle 100-1 includes a control system 105 (e.g., controller(s), computing device(s), etc.). Control system 105 is operable to send control signals to control controllable subsystems, including propulsion subsystem 112 and steering subsystem 114, to set and adjust operating settings of fairway mowing vehicle 100-1, such as travel direction (or heading) and travel speed. As will be discussed in more detail in FIG. 2, control system 105 can include, or by implemented by, memory storing instructions and one or more processors that execute the instructions. Further, control system 105 can include other items, such as path planning system (e.g., 215), as will be shown in FIG. 2.

While not shown in FIG. 1, fairway mowing vehicle 100-1 can include a number of different sensors (e.g. 218) that can provide sensor data (e.g., sensor signals, images, etc.) that can be used by control system 105 to in the control of fairway mowing vehicle 100-1. Some examples of such sensors (e.g., 218) are shown in FIG. 2.

It will be understood that a fairway mowing vehicle 100-1 is merely one example of a grass mowing vehicle and that that systems and methods described herein are applicable to and can be used with various other forms of grass mowing vehicles such as, but not limited to, other golf mowing vehicles (e.g., triplex mowing vehicles, etc.), yard mowing vehicles (e.g., zero-turn mowing vehicles, riding lawn tractors, etc.), sport turf mowing vehicles, as well as various other grass mowing vehicles.

FIG. 2 is a block diagram showing one example grass mowing system architecture 500 (hereinafter also referred to as grass mowing system 500 or as system 500). Grass mowing system 500 includes one or more grass mowing vehicles 100 (e.g., one or more fairway mowing vehicles 100-1, etc.). System 500 also includes one or more remote computing systems 300, one or more networks 359, one or more remote user interface mechanisms 364, and can include a variety of other items 501 as well.

Each grass mowing vehicle 100, itself, illustratively includes one or more processors or servers 202, one or more data stores 204, control system 205 communication system 206, one or more controllable subsystems 210, one or more sensors 218, one or more operator interface mechanisms 220, and can include various other items and functionality 221. A grass mowing vehicle 100 can also be referred to as a mower 100, for instance, a fairway mowing vehicle 100-1 can also be referred to as a fairway mower 100-1.

Remote computing systems 300, as illustrated, include one or more processors or servers 302, one or more data stores 304, communication system 306, and can include various other items and functionality 319.

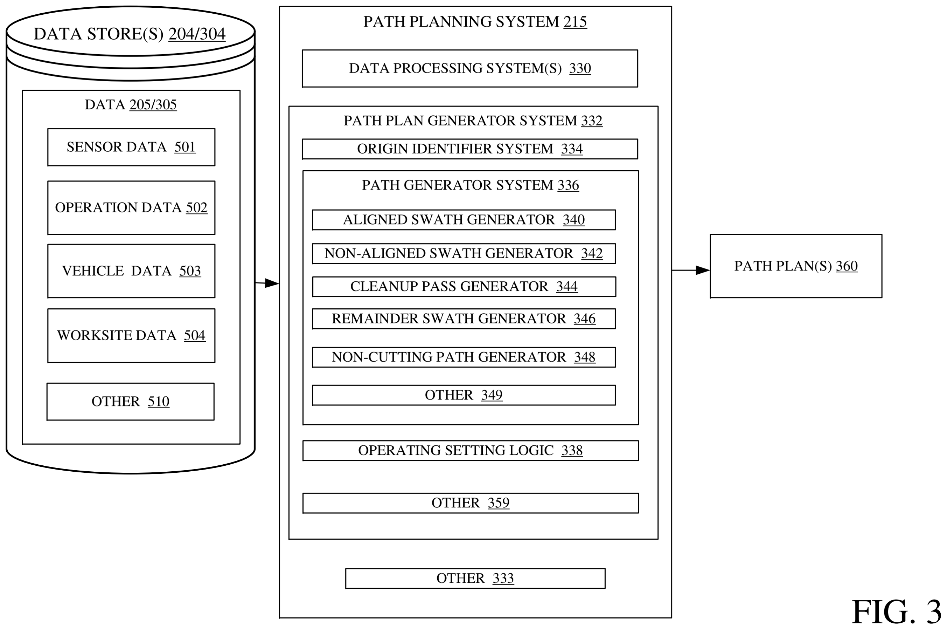

Data stores 204 and data stores 304 each store a variety of data (generally indicated as data 205 and data 305 respectively), some of which will be described in more detail herein. For example, data 205 or data 305, or a combination thereof, can include, among other things, sensor data, operation data, vehicle data, worksite data, as well as various other data. Some examples of the various data will be described in more detail in FIG. 3. Additionally, data 205 can include computer executable instructions that are executable by one or more processors or servers 202 to implement other items or functionalities of system 500, including other items or functionalities of grass mowing vehicles 100. Additionally, data 305 can include computer executable instructions that are executable by one or more processors or servers 302 to implement other items or functionalities of system 500, including other items of remote computing systems 300. It will be understood that data stores 204 and data stores 304 can include different forms of data stores, for instance both volatile data stores (e.g., Random Access Memory (RAM)) and non-volatile data stores (e.g., Read Only Memory (ROM), hard drives, solid state drives, etc.).

Sensors 218 can include one or more heading sensor systems 224, one or more speed sensors 225, one or more geographic position sensors 203, and can include various other sensors 228 as well. The sensor data generated by sensors 208 can be communicated to remote computing systems 300, to other grass mowing vehicles 100, and to other items of a grass mowing vehicle 100.

Geographic position sensors 203 illustratively sense or detect the geographic position or location of a grass mowing vehicle 100. Geographic position sensors 203 can include, but are not limited to, a global navigation satellite system (GNSS) receiver that receives signals from a GNSS satellite transmitter. Geographic position sensors 203 can also include a real-time kinematic (RTK) component that is configured to enhance the precision of position data derived from the GNSS signal. Geographic position sensors 203 can include one or more RADAR sensors, LIDAR sensor, ultrasonic sensors, or cameras that generate sensor data for use in Simultaneous Localization and Mapping (SLAM) to identify the position or location of a grass mowing vehicle 100. Geographic position sensors 203 can include a dead reckoning system, a cellular triangulation system, or any of a variety of other geographic position sensors. Heading sensors 224 detect a heading characteristic (e.g., travel direction) of a grass mowing vehicle 100. This can include sensors that sense the movement or orientation (e.g., turn angle) of ground-engaging traction elements (e.g., wheels 110) or movement of components coupled to the ground engaging traction elements (e.g., steering shaft) or other elements, or can utilize signals received from other sources, such as geographic position sensors 203. Thus, while heading sensors 224 as described herein are shown as separate from geographic position sensors 203, in some examples, vehicle heading is derived from signals received from geographic position sensors 203 and subsequent processing. In other examples, heading sensors 225 are separate sensors and do not utilize signals received from other sources.

Speed sensors 225 detect a speed characteristic (e.g., travel speed, acceleration, deceleration, etc.), or both, of a grass mowing vehicle 100. This can include sensors that sense the movement (e.g., rotation) of ground-engaging elements (e.g., wheels 108 or wheels 110) or movement of components coupled to the ground engaging elements (e.g., axles), or other elements. This can include sensors, such as LIDAR or RADAR. In some examples, signals received from other sources, such as geographic position sensors 203, can be utilized to detect speed characteristics. Thus, while speed sensors 225 as described herein are shown as separate from geographic position sensors 203, in some examples, vehicle speed is derived from signals received from geographic position sensors 203 and subsequent processing. In other examples, speed sensors 225 are separate sensors and do not utilize signals received from other sources.

Sensors 218 can also include various other types of sensors 228.

Control system 205 can be or can include one or more controllers or one or more computing devices, or both, and can further include, or be implemented by, memory (e.g., 204) storing instructions (e.g., of data 205) and one or more processors 202 that execute the instructions. Control system 205 can also include path planning system 215 and various other items 237. Control system 205 is operable to control various items of a grass mowing vehicle 100, including, but not limited to, controllable subsystems 210. One example of control system 205 is control system 105 discussed in FIG. 1. Controllable subsystems 210 can include propulsion subsystem 212, steering subsystem 214, cutting unit orientation subsystem 215, cutting unit actuation subsystem 216, and can include various other controllable subsystems 217 as well.

Control system 205 can generate control signals to control one or more components of a grass mowing vehicle 100 or components of system 500, or both. For example, but not by limitation, control system 205 can control controllable subsystems 210, communication system 206, as well as operator interface mechanisms 220. In some examples, control system 205 can generate control signals to control items of system 500, such as remote user interface mechanisms 364. Propulsion subsystem 212 includes a powerplant (e.g., internal combustion engine, batteries, hybrid (combustion engine and batteries), etc.) as well as other drivetrain elements (e.g., gearbox, axles, brakes, actuators (e.g., electric motors, etc.). Propulsion subsystem 212 is controllable to control a travel speed of a grass mowing vehicle 100 by controllably driving movement of ground-engaging traction elements (e.g., wheels 108). One example of propulsion subsystem 212 is propulsion subsystem 112 shown in FIG. 1.

Steering subsystem 214 includes one or more controllable actuators (e.g., linear actuators, hydraulic actuators, etc.) and linkages that are controllably actuatable to control the orientation (e.g., turn angle) of ground-engaging traction elements (e.g., wheels 110) and thus, heading of a grass mowing vehicle 100. One example of steering subsystem 214 is steering subsystem 114 shown in FIG. 1.

Cutting unit orientation subsystem 215 includes one or more controllable actuators, such as hydraulic actuators (e.g., hydraulic cylinders), linear actuators, pneumatic actuators, or various other types of actuators that are controllable to change orientation (height, tilt, roll, etc.) of cutting units (e.g., 104, 106, etc.) of a grass mowing vehicle 100 such as by actuating movement of moveable support apparatuses (e.g., 102, 103, etc.) of the grass mowing vehicle 100. One example of cutting unit orientation subsystem 215 is cutting unit orientation subsystem 115 shown in FIG. 1.

Cutting unit actuation subsystem 216 includes one or more controllable actuators (e.g., motors, etc.) that are controllable to controllably actuate movement of cutting functionality (e.g., 107, etc.) of cutting units (e.g., 104, 106, etc.) of a grass mowing vehicle 100. Cutting unit actuation subsystem 216 is operable to initiate and terminate movement (e.g., rotation) of the cutting functionality as well as to control a speed of movement (e.g., speed of rotation) of the cutting functionality. One example of cutting unit actuation subsystem 216 is cutting unit actuation subsystem 116 shown in FIG. 1.

FIG. 2 also shows that control system 205 can include path planning system 215. Path planning system 215 is operable to generate a path plan for a worksite (e.g., golf course, park, athletic field, yard, etc.) that includes a route, including cutting paths (e.g., swaths) and non-cutting paths, for a grass mowing vehicle 100 as well as prescriptive operating settings along the planned route. Non-cutting paths can include turns that connect the cutting paths as well as paths between separate mowing areas and paths from non-mowing areas to mowing areas. As will be shown and discussed below, path planning system 215 is operable to generate a path plan for a worksite that aligns swaths of separate mowing areas of a worksite. Path planning system 215 will be discussed in more detail in FIG. 3.

Communication system 206 is used to communicate between components of a grass mowing vehicle 100 or with other items of system 500, such as remote computing systems 300, other grass mowing vehicles 100, user interface mechanisms 364, or a combination thereof. Communication system 306 is used to communicate between components of a remote computing system 300 or with other items of system 500, such as grass mowing vehicles 100, other remote computing systems 300, user interface mechanisms 364, or a combination thereof. Communication systems 206 and 306 can each include one or more of wired communication circuitry and wireless communication circuitry, as well as wired and wireless communication components. In some examples, communication systems 206 and 306 can each be a system for communicating over the Internet, a cellular communication system, a system for communicating over a wide area network or a local area network, a system for communicating over a controller area network (CAN), such as a CAN bus, a system for communicating over a controller area network flexible data-rate (CAN-FD), such as a CAN-FD bus, a system for communication over a near field communication network, a system for communicating over ethernet, or a communication system configured to communicate over any of a variety of other networks. Communication systems 206 and 306 can each also include a system that facilitates downloads or transfers of information to and from a secure digital (SD) card or a universal serial bus (USB) card, or both. Communication systems 206 and 306 can each utilize networks 359. Networks 359 can be any of a wide variety of different types of networks such as the Internet, a cellular network, a wide area network (WAN), a local area network (LAN), a controller area network (CAN), a controller area network flexible data-rate (CAN-FD), a near-field communication network, ethernet, or any of a wide variety of other networks.

FIG. 2 shows that one or more operators 361 can operate grass mowing vehicles 100. The operators 361 interact with operator interface mechanisms 220. In some examples, operator interface mechanisms 218 can each include joysticks, levers, a steering wheel, linkages, pedals, buttons, wireless devices (e.g., mobile computing devices, etc.), dials, keypads, a display device (including a display screen), user actuatable elements (such as icons, buttons, etc.) on a display device, a microphone and speaker (where speech recognition and speech synthesis are provided), among a wide variety of other types of operator input control devices. Where a touch sensitive display system is provided, the operators 361 can interact with operator interface mechanisms 220 using touch gestures. Additionally, at least some of the operator interface mechanisms 220 can be used to present (e.g., display, audible presentation, haptic presentation, etc.) various information. In some examples, some operator interface mechanisms 220 (e.g., mobile devices) may be wirelessly connected to grass mowing vehicles 100, such that they can be remote from the grass mowing vehicles 100 and used by operators 361 to remotely operate grass mowing vehicles 100. Operator interface mechanisms 220 can also be utilized by operators 361 to interact, over networks 359, with other items of system 500 such as remote computing systems 300 or user interface mechanisms 364. The examples described above are provided as illustrative examples and are not intended to limit the scope of the present disclosure. Consequently, other types of operator interface mechanisms 220 can be used and are within the scope of the present disclosure.

FIG. 2 also shows remote users 366 interacting with grass mowing vehicles 100 and remote computing systems 300 through user interface mechanisms 364 over networks 359. In some examples, user interface mechanisms 364 can include joysticks, levers, a steering wheel, linkages, pedals, buttons, wireless devices (e.g., mobile computing devices, etc.), dials, keypads, a display device (including a display screen), user actuatable elements (such as icons, buttons, etc.) on a display device, a microphone and speaker (where speech recognition and speech synthesis are provided), among a wide variety of other types of control devices. Where a touch sensitive display system is provided, the users 366 can interact with user interface mechanisms 364 using touch gestures. Additionally, at least some of the user interface mechanisms 364 can be used to present (e.g., display, audible presentation, haptic presentation, etc.) various information. The examples described above are provided as illustrative examples and are not intended to limit the scope of the present disclosure. Consequently, other types of user interface mechanisms 364 can be used and are within the scope of the present disclosure. Remote computing systems 300 can be a wide variety of different types of systems, or combinations thereof. For example, remote computing systems 300 can be in a remote server environment. Further, remote computing systems 300 can be remote computing systems, such as mobile devices, a remote network, a manager system, a vendor system, or a wide variety of other remote systems. In one example, grass mowing vehicles 100 can be controlled remotely by remote computing systems 300 or by remote users 366, or both. In some examples, operators 361 are on-board (e.g., in an operator compartment) the grass mowing vehicles 100. In some examples, operators 361 are remote from the grass mowing vehicles 100 and control the grass mowing vehicles through one or more interface mechanisms 220 which are remote from the grass mowing vehicles 100 but are operatively coupled (e.g., communicatively coupled, such as over networks 359) to the vehicles 100.

It will be understood that, in some examples, items in system 500 can be distributed in various ways, including ways that differ from the example shown in FIG. 2. For example, but not by limitation, path planning system 215, shown in FIG. 2 as being disposed on each grass mowing vehicle 100, can be located elsewhere, such as at one or more remote computing systems 300. In yet other examples, path planning system 215 can be distributed across both one or more grass mowing vehicles 100 and one or more remote computing systems 300. These are merely some examples of the distributions contemplated herein.

FIG. 3 is a block diagram that shows examples of some of the components of system 500 in more detail and information flow between the components.

As illustrated in FIG. 3, it can be seen that data stores 204, data stores 304, or a combination thereof, can include as data (205 and 305, respectively), sensor data 501, operation data 502, vehicle data 503, worksite data 504, and can include various other data 510, including, but not limited to, other data described elsewhere herein. In some examples, where the data is located can depend on where path planning system 215 (also called system 215) is located. The data can be used by path planning system 215 in generating path plans 360, as well as by other items of system 500, such as control system 205.

As shown in FIG. 3, path planning system 215 includes one or more data processing systems 330, path plan generator system 332, and can include various other items 333. Path plan generator system 332 includes origin identifier system 334, path generator system 336, operating setting logic 338, and can include various other items 359. Path generator system 336, itself, includes aligned swath generator 340, non-aligned swath generator 342, cleanup pass generator 344, remainder swath generator 346, non-cutting path generator 348, and can include various other items 349. As will be described in more detail, system 215 is operable to generate one or more path plans 360.

Sensor data 501 includes sensor data (e.g., images, sensor signals, etc.) generated by sensors 218. Sensor data 501 can include, geographic position sensor data (indicative of geographic positions of grass mowing vehicles 100) generated by geographic position sensors 203, heading sensor data (indicative of headings of grass mowing vehicles 100) generated by heading sensors 224, speed sensor data (indicative of travels speeds of grass mowing vehicles 100) generated by speed sensors 225, as well as various other sensor data generated by other sensors 228.

Operation data 502 includes data indicative of one or more parameters of the operation being performed by the one or more vehicles 100. For example, operation data 502 can include design data such as swath angle (e.g., angle at which the swaths should be arranged at the worksite), swath cut pattern (e.g., striping, etc.), overlap, swath alignment data (e.g., indicating how swaths should be aligned - aligned in angle or aligned in angle and cut direction, etc.), as well as other operation design data. For instance, swatch cut pattern can indicate the type of pattern (e.g., striping, etc.) as well as how the pattern should proceed (e.g., in striping whether to start with a "light" swath or a "dark" swath). Operation data 502 can include thresholds, such as a remainder swath threshold (as will be discussed in more detail below). Operation data 502 can include a variety of other data. Operation data 502 can be derived from one or more of a variety of sources including, but not limited to, operator or user input, dealer or manufacturer provided information, as well as a variety of other sources.

Vehicle data 503 includes data indicative of one or more characteristics of each of the one or more grass mowing vehicles 100 that are to perform (or are performing) the operation at the worksite. Vehicle data 503 can include dimensional data such as vehicle height, vehicle width, vehicle length, and vehicle cutting width, dimensions of individual components of a vehicle 100, distances between components of a vehicle 100, as well as other dimensional data. Vehicle data 503 can include vehicle ratings (vehicle capabilities), such as travel speed ratings (e.g., minimum and maximum travel speeds), turn radius, as well as various other vehicle ratings. Vehicle data 503 can include a variety of other data. Vehicle data 503 can be derived from one or more of a variety of sources including, but not limited to, dealer or manufacturer provided information, operator or user input, generated by control system, as well as a variety of other sources.

Worksite data 504 includes data indicative of attributes of worksite(s) at which operation(s) (mowing operation(s)) are to be performed by vehicles 100. Worksite data 504 can include maps of the worksite. Worksite data 504, such a map of the worksite, can include location and boundary information for the worksite, location and boundary information for mowing areas of the worksite, location and boundary information for non-mowing areas, identifying (e.g., typing) information for non-mowing areas, as well as various other information. Worksite data 504 can be obtained from one or more of a variety of sources including operator or user input, overhead (e.g., satellite, etc.) imagery, historical operation data (e.g., sensor data from prior operations at the worksite), third-party providers, as well as
Data processing systems process sensor data 501, operation data 502, vehicle data 503, worksite data 504, and other data 510 to generate processed data. The processed data can include computer readable values, useable (or readable) by other items of path planning system 215 or by other items of system 500. Data processing systems 330 can include various processing functionality, including image processing functionality, sensor signal processing functionality, filtering functionality, categorization functionality, normalization functionality, aggregation functionality, color extraction functionality, analog-to-digital conversion functionality, other conversion functionality (e.g., look up tables, equations, mathematical functions, models, etc.), as well as various other data processing functionalities. It will be understood then that data processing systems 330 can, for example, convert analog signals to readable digital signals (or digital values). It will be understood that data processing systems 330 can, for example, process captured images to extract values (e.g., pixel values, etc.), and can further convert the extracted values. It will be understood that data processing systems 330 can perform pre-processing and post-processing. It will be understood that data processing systems 330 can perform various forms of aggregation on the extracted or converted values. These are merely some examples of processing functionalities of data processing systems 330. Origin identifier system 334 is operable to identify an origin (e.g., map origin) of a worksite based on worksite data 504. In some examples, origin identifier system 334 identifies an origin by obtaining an origin provided (input) by a user or operator, such as a map origin provided (input) by a user or operator. For example, a user or operator may designate a location on a map of the worksite as the map origin. For instance, a user or operator may designate a known location of the worksite as the map origin (e.g., golf clubhouse, etc.). In some examples, origin identifier system 334 identifies an origin by calculating the origin, such as calculating an XY origin of a map of the worksite or a geographic center of a map of the worksite. The origin (e.g., map origin) is useable by path plan generator system 336 to generate swaths (as well as other portions of routes) of a path plan 360. That is, swaths (as well as other portions of routes) of a path plan 360 are generated off of the origin identified by origin identifier system 334.

Path plan generator system 336 is operable to generate one or more path plans 360 useable to automatically control grass mowing vehicles 100 to operate at a worksite based on one or more items of data 205/305 and an origin identified by origin identifier system 334. By automatically it is meant that the step or function is performed without further manual involvement except, perhaps, to initiate or authorize it. A path plan 360 can include routes for a vehicle 100 to traverse a worksite. The routes can include cutting paths or passes as well as non-cutting paths or passes. Cutting paths or passes can include swaths and cleanup passes. Non-cutting paths or passes can include turns that connect cutting paths, paths between separate mowing areas, and paths from non-mowing areas to mowing areas. A path plan 360 can also include prescriptive operating settings (e.g., prescriptive operating settings for propulsion subsystem 212 (e.g., prescriptive travel speeds, etc.), prescriptive operating settings for steering subsystem 214 (e.g., prescriptive steering angle, etc.), prescriptive operating settings for cutting unit orientation subsystem 215 (e.g., prescriptive lift and lower commands, etc.), prescriptive operating settings for cutting unit actuation subsystem 216 (e.g., prescriptive on/off commands, prescriptive cutting functionality speeds, etc.), as well as prescriptive operating settings for other controllable subsystems 217) along the routes of a path plan 360. Control system 205 can generate control signals to control controllable subsystems 210 based on a path plan 360. Control system 205 can generate control signals to control interface mechanisms (e.g., 220 or 364, or both) based on a path plan 360, such as to present (e.g., display, etc.) the path plan or information (e.g., routes (or portions thereof) or prescriptive operational settings, or both) derived therefrom.

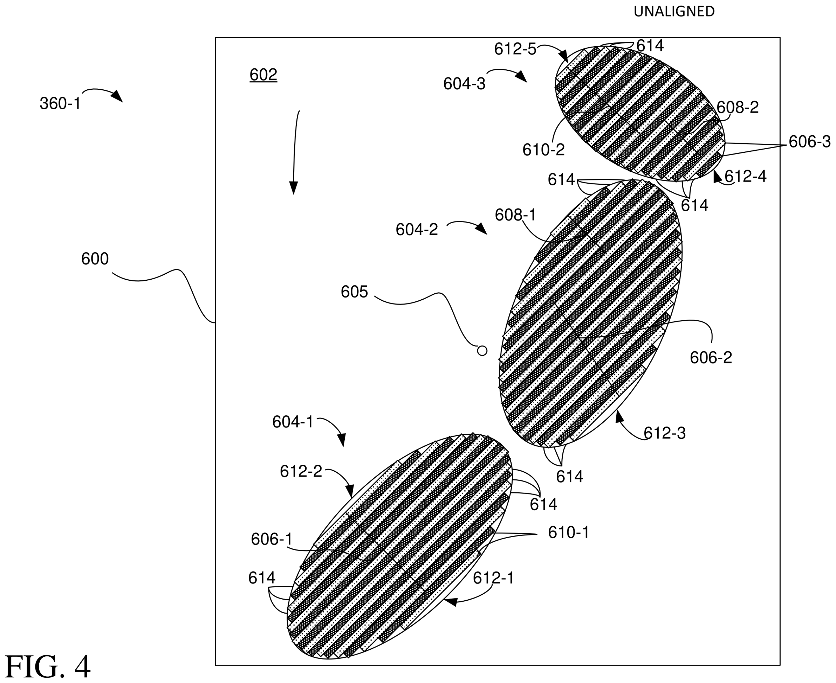

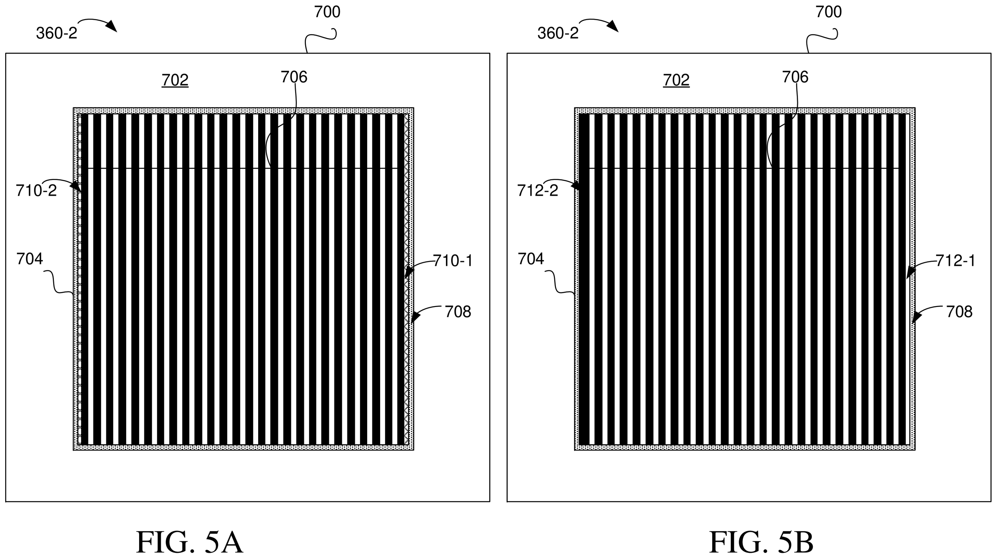

Aligned swath generator 340 is operable to generate sets of aligned swaths across a worksite (e.g., for a plurality of separate mowing areas of the worksite) based on one or more items of data 205/305 and an origin identified by origin identifier system 334. Swaths may be aligned by swath angle and cutting direction. For instance, aligned swath generator 340 can generate a respective set of aligned swaths for each of a plurality of separate mowing areas at a worksite, each swath from each respective set of aligned swaths will align with another swath from another respective set of aligned swaths. In some examples, a first mowing area may have a plurality of sets of aligned swaths, for instance, a first set of aligned swaths and a second set of aligned swaths. The first set of aligned swaths may align with a respective set of swaths of a second mowing area and the second set of aligned swaths may aligned with a respective set of swaths of a third mowing area. The aligned swaths generated by aligned swath generator 340 are generated to comply with design data (e.g., have the desired swath angle, cut pattern, and swath width (as defined by the overlap)). Example operation of aligned swath generator 340 and examples of aligned swaths are shown in FIGS. 4 and 5.

Non-aligned swath generator 342 is operable to generate sets of non-aligned swaths for each mowing area of a worksite based on one or more items of data 205/305 and an origin identified by origin identifier system 334. Path generator system 336 will generally attempt to fill out the mowing areas with aligned swaths. However, each mowing area may have areas that cannot be covered by aligned swaths, herein referred to as non-aligned areas. For these areas, non-aligned swath generator 342 generates non-aligned swaths to provide cutting coverage. Non-aligned swath generator 342 can generate the non-aligned swaths to match with the aligned swaths of the mowing area (e.g., to continue the cut pattern, be at the same swath angle, and have the same swath width (as defined by the overlap)). Example operation of non-aligned swath generator 342 and examples of non-aligned swaths are shown in FIGS. 4 and 5.

Cleanup pass generator 344 is operable to generate cleanup passes for mowing areas of the worksite based on one or more items of data 205/305 and an origin identified by origin identifier system 334. Path generator system 336 will generally attempt to fill out the mowing areas with aligned swaths and non-aligned swaths. However, each mowing area may have areas (e.g., adjacent to perimeters of the mowing area, etc.), herein referred to as cleanup areas, that are not able to be covered (cut) by the swaths. For the cleanup areas, cleanup pass generator 346 will generate one or more cleanup passes, for example one or more cleanup passes in the mowing area that follow the perimeter of the mowing area, including multiple cleanup passes the follow the perimeter, one at the perimeter and another slightly separated from the perimeter. In other cases, the cleanup passes may be routed directly to the identified uncovered (or uncut) areas. In some examples, a path plan 360 may always include at least one cleanup pass around the perimeter of the mowing area. Example operation of cleanup pass generator 344 and examples of cleanup passes are shown in FIGS. 4 and 5.

Remainder swath generator 346 is operable to generate remainder swaths for mowing areas of the worksite based on one or more items of data 205/305 and an origin identified by origin identifier system 334. Path generator system 336 will generally attempt to fill out the mowing areas with aligned swaths, non-aligned swaths, and one or more cleanup passes. However, each mowing area may have areas (e.g., adjacent to perimeters of the mowing area, etc.), that are not covered by aligned swaths, non-aligned swaths, and cleanup passes. Such areas are referred to herein as remainder areas. These remainder areas are generally interposed between a cleanup pass and a swath and are generally narrower than the cutting width or desired swath width and thus cannot accommodate an entire swath (an entire swath of the desired width) without overlapping with an adjacent swath or cleanup pass. For the remainder areas, remainder swath generator 346 will generate swaths utilizing a remainder swath threshold. The remainder swath threshold may be a value (e.g., a width value), which may be a default value, a value provided by an operator or user, or another value provide in another way. For example, a remainder swath threshold may be fifty percent (50%). Where the width of the remainder area is less than the threshold (e.g., 50% of the cutting width or desired swath width), remainder swath generator 344 will generate a swath of the same angle and cut direction as the adjacent swath (in this way the remainder swath will become a continuation of the adjacent swath such that the adjacent swath appears as a relatively wider swath). Where the width of the remainder area has a width that is at or more than the threshold (e.g. 50% of the cutting width or desired swath width), remainder swath generator 344 will generate a swath of the same angle as the adjacent swath but of a different cut direction (in this way it will appear as if the remainder swath is another, albeit relatively skinnier, swath). It will be understood that 50% is used merely as an example and can be a variety of other percentages or values. Example operation of remainder swath generator 344 and examples of remainder swaths are shown in FIGS. 4 and 5.

Non-cutting path generator 348 is operable to generate non-cutting paths for the worksite based on one or more items of data 205/305 and an origin identified by origin identifier system 334. Non-cutting paths (or passes) can include turns that connect cutting paths (e.g., swaths, cleanup passes), paths between separate mowing areas, and paths from non-mowing areas to mowing areas.

Operating setting logic 338 is operable to generate prescriptive operating settings for use in controlling the grass mowing vehicles to carry out a path plan 360 (e.g., to follow the routes, cut the cutting passes or paths, not cut the non-cutting passes or paths, etc.), based on the one or more items of data 205/305, and the routes (e.g., swaths, cleanup passes, non-cutting paths) generated by path generator system 336. Operating setting logic 338 can generate a variety of prescriptive operating settings such as prescriptive operating settings for propulsion subsystem 212 (e.g., prescriptive travel speeds, etc.), prescriptive operating settings for steering subsystem 214 (e.g., prescriptive steering angle, etc.), prescriptive operating settings for cutting unit orientation subsystem 215 (e.g., prescriptive lift and lower commands, etc.), prescriptive operating settings for cutting unit actuation subsystem 216 (e.g., prescriptive on/off commands, prescriptive cutting functionality speeds, etc.), as well as prescriptive operating settings for other controllable subsystems 217.

It can be seen that path planning system 215 is operable to generate one or more path plans 360 useable to automatically control grass mowing vehicles 100 to operate at a worksite. A path plan 360 can include routes for a vehicle 100 to traverse a worksite. The routes can include cutting paths or passes as well as non-cutting paths or passes. Cutting paths or passes can include swaths and cleanup passes. A path plan 360 can include swaths for a mowing area that are aligned with swaths of one or more other mowing areas of the worksite. Non-cutting paths or passes can include turns that connect cutting paths, paths between separate mowing areas, and paths from non-mowing areas to mowing areas. A path plan 360 can also include prescriptive operating settings (e.g., prescriptive operating settings for propulsion subsystem 212 (e.g., prescriptive travel speeds, etc.), prescriptive operating settings for steering subsystem 214 (e.g., prescriptive steering angle, etc.), prescriptive operating settings for cutting unit orientation subsystem 215 (e.g., prescriptive lift and lower commands, etc.), prescriptive operating settings for cutting unit actuation subsystem 216 (e.g., prescriptive on/off commands, prescriptive cutting functionality speeds, etc.), as well as prescriptive operating settings for other controllable subsystems 217). Control system 205 can automatically generate control signals to control controllable subsystems 210 based on a path plan 360 in order to automatically control a grass mowing vehicle 100. Control system 205 can automatically generate control signals to control interface mechanisms (e.g., 220 or 364, or both) based on a path plan 360, such as to present (e.g., display, etc.) the path plan or information (e.g., routes or prescriptive operational settings, or both) derived therefrom.

FIG. 4 is a pictorial illustration showing example operation of path plan generator system 332 in generating a path plan 360 (illustratively 360-1) for a worksite (illustratively 600). In the illustrated example, worksite 600 is a golf course. Worksite 600 includes a plurality of mowing areas 604 (illustratively 604-1, 604-2, and 604-3) and non-mowing areas 602. As can be seen, the mowing areas 604 are separated from one another by non-mowing areas 602. In one example, the mowing areas 604 are separate holes of the golf course. In another example, the mowing areas 604 are separate portions of the same golf hole, such as separate portions of a split fairway of a golf hole of the golf course or such as tee box, a fairway, and a green of a golf hole of the golf course.

As can be seen, path plan generator system 332 (e.g., origin identifier system 334) has identified (e.g., obtained, calculated, etc.) an origin (e.g. map origin) 605 corresponding to worksite 600. Further, as can be seen in FIG. 4, the cut pattern is a striping cut pattern that provides an alternating light and dark stripes by cutting each swath in a different direction from an adjacent swath (save for, in some examples, the remainder swaths, as will be discussed below).

As can be seen, the path plan 360-1 provides corresponding sets of aligned swaths 606 (illustratively 606-1, 606-2, and 606-3) for each of the mowing areas 604. As can be seen, per the path plan 360-1, mowing area 604-1 has a set of aligned swaths 606-1 that align (in swath angle, swath width, and cut direction) with a set of aligned swaths 606-2 of mowing area 604-2 and a set of aligned swaths 606-3 of mowing area 604-3.

As can further be seen, the path plan 360-1 provides additional sets of corresponding aligned swaths 608 (illustratively 608-1 and 608-1) for mowing areas 604-2 and 604-3. As can be seen, mowing area 604-2 has a set of aligned swaths 608-1 that align (in swath angle, swath width, and cut direction) with a set of aligned swaths 608-2 of mowing area 604-3.

As can be seen, the path plan 360-1 provides a set of non-aligned swaths 610 (illustratively 610-1 and 610-2) for mowing areas 604-1 and 604-3. As can be seen, the non-aligned swaths correspond to the other swaths in swath angle, swath width, and continue the cut pattern.

Further, as can be seen, each mowing area 604 has at least one remainder area 612 (illustratively 612-1, 612-2, 612-3, 612-4, and 612-5). In the illustrated example, the remainder swath threshold is 50%. The path plan 360-1 will provide a remainder swath (not shown) for remainder area 612-1 that matches in swath angle but differs in cut direction from the adjacent swath as the remainder area 612-1 has a width that is 50% or more than the cutting width or desired swath width. The path plan 360-1 will provide a remainder swath (not shown) for remainder area 612-2 that matches in swath angle but differs in cut direction from the adjacent swath as the remainder area 612-2 has a width that is 50% or more than the cutting width or desired swath width. The path plan 360-1 will provide a remainder swath (not shown) for remainder area 612-3 that matches in swath angle but differs in cut direction from the adjacent swath as the remainder area 612-3 has a width that is 50% or more than the cutting width or desired swath width. The path plan 360-1 will provide a remainder swath (not shown) for remainder area 612-4 that matches in both swath angle and cut direction with the adjacent swath as the remainder area 612-4 has a width that is 50% or more than the cutting width or desired swath width. The path plan 360-1 will provide a remainder swath (not shown) for remainder area 612-5 that matches in swath angle but differs in cut direction from the adjacent swath as the remainder area 612-5 has a width that is 50% or more than the cutting width or desired swath width.

As can be further seen, there are a plurality of uncovered (or uncut) areas (cleanup areas) (some of which are indicated generally as 614) around the perimeter of each mowing area. The path plan 360-1 will provide cleanup passes (not shown) to cut the cleanup areas.

While not shown in FIG. 4, it will be understood that the path plan 360-1 will also provide a variety of non-cutting paths including turns connecting the cutting passes (e.g., swaths, cleanup passes) as well as paths between the mowing areas 604, and paths from non-mowing areas 602 to mowing areas 604.

FIGS. 5A and 5B (collectively referred to herein as FIG. 5) are pictorial illustrations showing one example operation of path plan generator system 332 in generating a path plan 360 (illustratively 360-2) for a worksite (illustratively 700). Worksite 700 includes non-mowing areas 702 and a plurality of mowing areas 704, though only one mowing area 704 is shown for the sake of illustration. In the illustrated example, worksite 700 is a golf course. In one example, mowing area 704 is a hole of the golf course. In one example, mowing area 704 is a portion (e.g., portion of split fairway, fairway, green, tee box) of a golf hole.

As can be seen, path generator system 332 (e.g., origin identifier 334) has identified (e.g. obtained, calculated, etc.) an origin (e.g., map origin) 705 corresponding to worksite 700. Further, as can be seen in FIG. 5, the cut pattern in a striping cut pattern that provides alternative light and dark stripes by cutting each swath in a different direction from an adjacent swath (save for, in some examples, the remainder swaths, as will be discussed below).

As can be seen, path generator system 332 generates a plurality of swaths 706, some of which may be aligned swaths (e.g., aligned with swaths of one or more other mowing areas 704) and some of which may be non-aligned swaths. As can be seen, whether aligned swaths or non-aligned swaths, the swaths 706 correspond in angle and continue the cut pattern.

Further, as can be seen, path generator system 332 generates a cleanup pass 708 that goes around the perimeter of the mowing area 704.

As can be seen, mowing area 704 has a plurality of remainder areas 710 (illustratively 710-1 and 710-2) that are disposed between the cleanup pass 708 and a respective swath 706. In the illustrated example, the remainder swath threshold is 50%. The path plan 360-2 will provide a remainder swath 712-1 for remainder area 710-1 that matches the adjacent swath 706 in swath angle but differs from the adjacent swath in cut direction as remainder area 710-1 has a width that is 50% or more than the cutting width or desired swath width (i.e., is equal to or exceeds the threshold). The path plan 360-2 will provide a remainder swath 712-2 for remainder area 710-2 that matches the adjacent swath in both swath angle and cut direction as remainder area 710-2 has a width that is less than 50% of the cutting width or desired swath width (i.e., is less than the threshold).

While not shown in FIG. 5, it will be understood that the path plan 360-2 will also provide a variety of non-cutting paths including turns connecting cutting passes (e.g., swaths, cleanup passes) as well as paths between the mowing areas 704 and paths from non-mowing areas 702 to mowing areas 704. Again, as previously discussed, while the illustrated example shown in FIG. 5 only shows one mowing area 704, it will be understood that the worksite 700 can include a plurality of mowing areas 704 and that path plan 360-2 will provide, for each mowing area 704, respective swaths (aligned and non-aligned), cleanup passes, remainder swaths, and non-cutting paths.

It will be understood that, while the examples shown in FIGS. 4 and 5 show mowing areas of given shapes, that mowing areas can be any of a variety of shapes and that a path plan 360 can be generated for any of a variety of shapes of mowing areas.

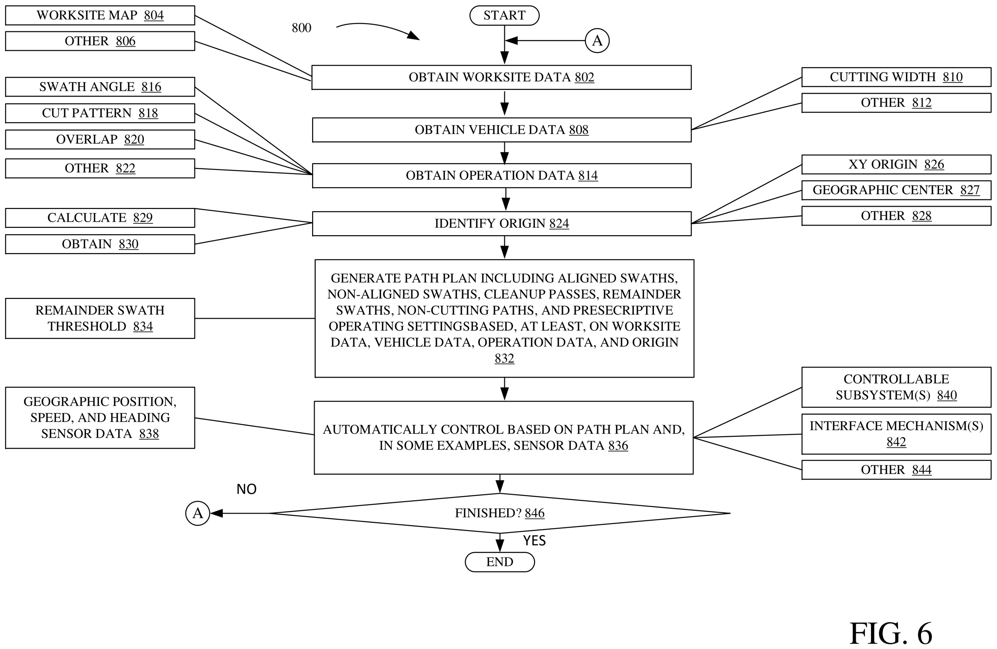

FIG. 6 is a flowchart showing one example operation 800 of system 500 in generating a path plan for a worksite and performing vehicle control at the worksite based thereon.

At block 802, path planning system 215 obtains worksite data 504. Worksite data 504 can include a worksite map, as indicated by block 804. Worksite data 504 can include a variety of other information, as indicated by block 806, including, but not limited to, the other information described in FIG. 3.

At block 808, path planning system 215 obtains vehicle data 503. Vehicle data 503 can include a variety of dimensional data relative to grass mowing vehicles 100, such as, but not limited to, cutting width, as indicated by block 810. Vehicle data 503 can include a variety of other information, as indicated by block 812, including, but not limited to, the other information described in FIG. 3.

At block 814, path planning system 215 obtains operation data 502. Operation data 502 can include various design data including, but not limited to, a desired or designed swath angle, as indicated by block 816, a desired or designed cut pattern, as indicated by block 818, a desired or designed overlap (which defines a swath width), as indicated by block 820. Operation data 503 can include a variety of other information, as indicated by block 822, including, but not limited to, the other information described in FIG. 3.

At block 824, path planning system 215 (e.g., origin identifier system 334) identifies an origin, such as a map origin, corresponding to the worksite. As indicated by block 828, identifying the map origin can comprise system 215 (e.g., origin identifier system 334) calculating the origin (e.g., map origin). As indicated by block 829, identifying the origin can comprise system 215 (e.g., origin identifier system 334) obtaining (e.g., retrieving or receiving) a user or operator input defining the origin (e.g.., map origin). As indicated by block 826, the origin (e.g., map origin), can be an XY map origin. As indicated by block 828, the origin (e.g., map origin), can be a geographic center of the worksite (or of the map of the worksite. As indicated by block 830, the origin can be in a variety of other forms including, but not limited to, the examples described in FIG. 3.

At block 832, path planning system 215 (e.g., path plan generator system 332) iterates path planning to generate a path plan 360 for the worksite based, at least, on the worksite data 504, the vehicle data 503, the operation data 502, and the identified origin. The path plan 360 can include aligned swaths (e.g., generated by aligned swath generator 340), non-aligned swaths (e.g., generated by non-aligned swath generator 342), cleanup passes (e.g., generated by cleanup pass generator 344), remainder swaths (e.g., generated by remainder swath generator 346), non-cutting paths (e.g., generated by non-cutting path generator 348), prescriptive operating settings (e.g., generated by operating setting logic 338), as well as various other items of information. As previously discussed, path planning system (e.g., remainder swath generator system 346) may utilize a remainder swath threshold in generating remainder swaths, as indicated by block 834.

At block 836, control system 205 obtains sensor data (e.g., 501) and the path plan 360 generated at block 832 and performs automatic control based thereon. As indicated by block 838, the obtained sensor data (e.g. 501) can include geographic position sensor data generated by geographic position sensors 203, speed sensor data generated by speed sensors 225, and heading sensor data generated by heading sensors 224,

As indicated by block 840, control system 205 can automatically control one or more controllable subsystems 210 of a grass mowing vehicle based on the obtained sensor data (e.g., 501) and the path plan 360 to automatically control the grass mowing vehicle according to the path plan 360. Additionally, or alternatively, control system 205 can automatically control one or more interface mechanisms (e.g., 220 or 364, or both) to present (e.g., display, etc.) the path plan 360 or information derived therefrom, as indicated by block 842. Additionally, or alternatively, control system 205 can automatically control one or more other items of system 500 based, at least, on the path plan 360, as indicated by block 844.

At block 846 it is determined if the path planning operation is complete. If the path planning operation is not complete, then processing returns to block 802. If, at block 846, the path planning operation is complete, then processing ends.

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. The displays can take a wide variety of different forms and can have a wide variety of different user actuatable operator interface mechanisms disposed thereon. For instance, user actuatable operator interface mechanisms can include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition can be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores can be local to the systems accessing the data stores, one or more of the data stores can all be located remote form a system utilizing the data store, or one or more data stores can be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality can be distributed among more components. In different examples, some functionality can be added, and some can be removed.

It will be noted that the above discussion has described a variety of different systems, logic, generators, and interactions. It will be appreciated that any or all of such systems, logic, generators, and interactions can be implemented by hardware items, such as one or more processors, one or more processors executing computer executable instructions stored in memory, memory, or other processing components, some of which are described below, that perform the functions associated with those systems, logic, generators, or interactions. In addition, any or all of the systems, logic, generators, and interactions can be implemented by software that is loaded into a memory and is subsequently executed by one or more processors or one or more servers or other computing component(s), as described below. Any or all of the systems, logic, generators, and interactions can also be implemented by different combinations of hardware, software, firmware, etc., some examples of which are described below. These are some examples of different structures that can be used to implement any or all of the systems, logic, generators, and interactions described above. Other structures can be used as well.

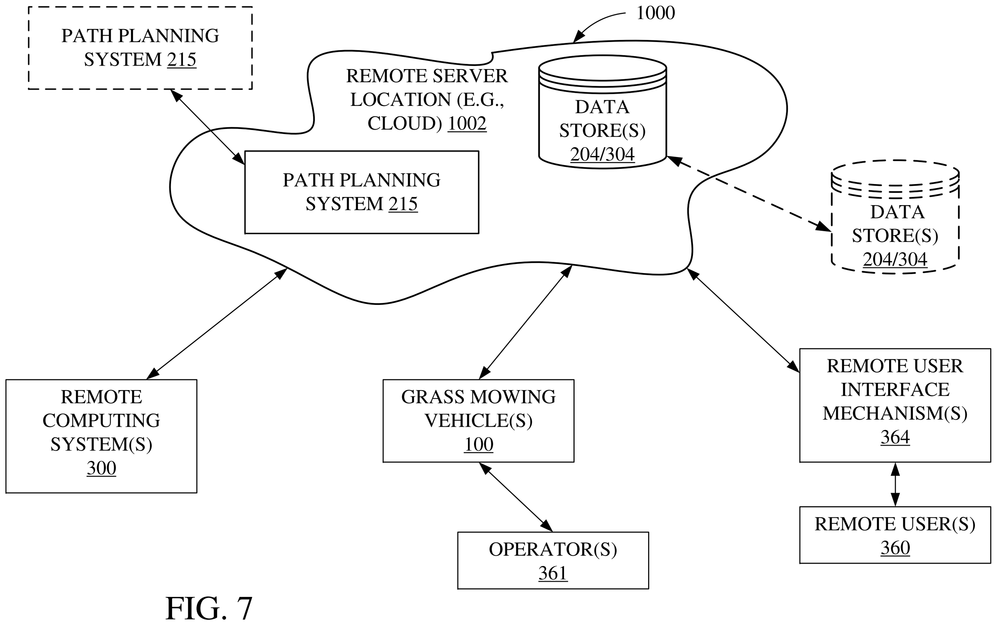

FIG. 7 is a block diagram of a remote server architecture 1000. FIG. 7, also shows one or more grass mowing vehicles 100, one or more remote computing systems 300, and one or more remote user interface mechanisms 364 in communication with the remote server environment. The grass mowing vehicles 100, remote computing systems 300, and remote user interface mechanisms 364 communicate with elements in a remote server architecture 1000. In some examples, remote server architecture 1000 provides computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and can be accessible through a web browser or any other computing component. Software or components shown in previous figures as well as data associated therewith, can be stored on servers at a remote location. The computing resources in a remote server environment can be consolidated at a remote data center location, or the computing resources can be dispersed to a plurality of remote data centers. Remote server infrastructures can deliver services through shared data centers, even though the services appear as a single point of access for the user. Thus, the components and functions described herein can be provided from a remote server at a remote location using a remote server architecture. Alternatively, the components and functions can be provided from a server, or the components and functions can be installed on client devices directly, or in other ways.

In the example shown in FIG. 7, some items are similar to those shown in previous figures and those items are similarly numbered. FIG. 7 specifically shows that path planning system 215, data stores 204 or data stores 304, or a combination thereof, can be located at a server location 1002 that is remote from the grass mowing vehicles 100, remote computing systems 300, and remote user interface mechanisms 364. Therefore, in the example shown in FIG. 7, grass mowing vehicles 100, remote computing systems 300, and remote user interface mechanisms 364 access systems through remote server location 1002. In other examples, various other items can also be located at server location 1002, such as various other items of grass mowing system architecture 500.

FIG. 7 also depicts another example of a remote server architecture. FIG. 7 shows that some elements of previous figures can be disposed at a remote server location 1002 while others can be located elsewhere. By way of example, one or more of data store(s) 204 and 304 can be disposed at a location separate from location 1002 and accessed via the remote server at location 1002. Similarly, path planning system 215 can be disposed at a location separate from location 1002 and accessed via the remote server at location 1002. Regardless of where the elements are located, the elements can be accessed directly by grass mowing vehicles 100, remote computing systems 300, and remote user interface mechanisms 364 through a network such as a wide area network or a local area network; the elements can be hosted at a remote site by a service; or the elements can be provided as a service or accessed by a connection service that resides in a remote location. Also, data can be stored in any location, and the stored data can be accessed by, or forwarded to, operators, users, or systems. For instance, physical carriers can be used instead of, or in addition to, electromagnetic wave carriers. In some examples, where wireless telecommunication service coverage is poor or nonexistent, another machine, such as a fuel truck or other mobile machine or vehicle, can have an automated, semi-automated or manual information collection system. As a mobile machine (e.g., grass mowing vehicle 100) comes close to the machine containing the information collection system, such as a fuel truck prior to fueling, or other mobile machine or vehicle, the information collection system collects the information from the mobile machine (e.g., grass mowing vehicle 100) using any type of ad-hoc wireless connection. The collected information can then be forwarded to another network when the machine containing the received information reaches a location where wireless telecommunication service coverage or other wireless coverage is available. For instance, a fuel truck can enter an area having wireless communication coverage when traveling to a location to fuel other machines or when at a main fuel storage location. Other mobile machines or vehicles can enter an area having wireless communication coverage when traveling to other locations or when at another location. All of these architectures are contemplated herein. Further, the information can be stored on a mobile machine (e.g., grass mowing vehicle 100) until the mobile machine enters an area having wireless communication coverage. The mobile machine (e.g., grass mowing vehicle 100), itself, can send the information to another network.

It will also be noted that the elements of previous figures, or portions thereof, can be disposed on a wide variety of different devices. One or more of those devices can include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 1000 can include cybersecurity measures. Without limitation, these measures can include encryption of data on storage devices, encryption of data sent between network nodes, authentication of people or processes accessing data, as well as the use of ledgers for recording metadata, data, data transfers, data accesses, and data transformations. In some examples, the ledgers can be distributed and immutable (e.g., implemented as blockchain).

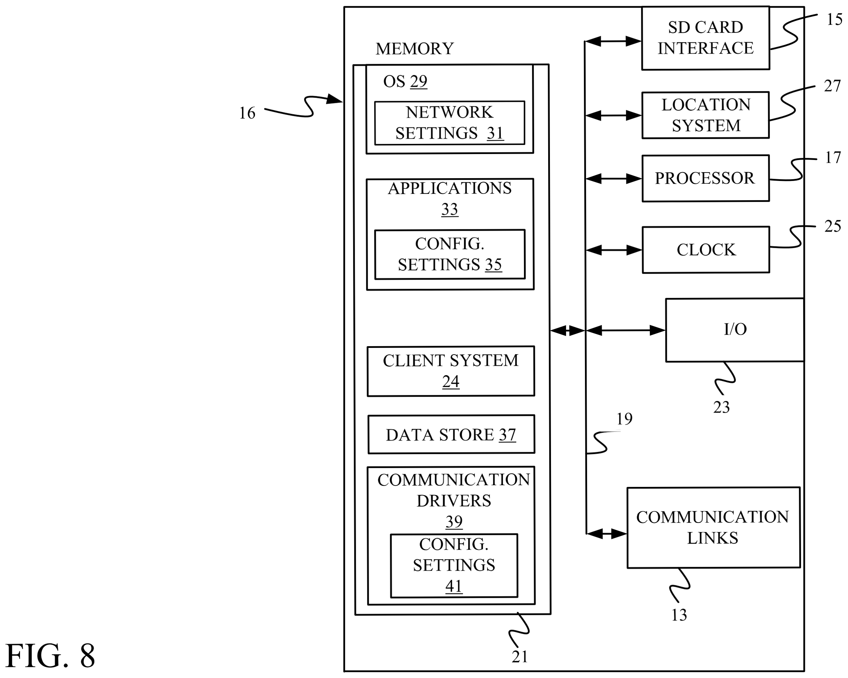

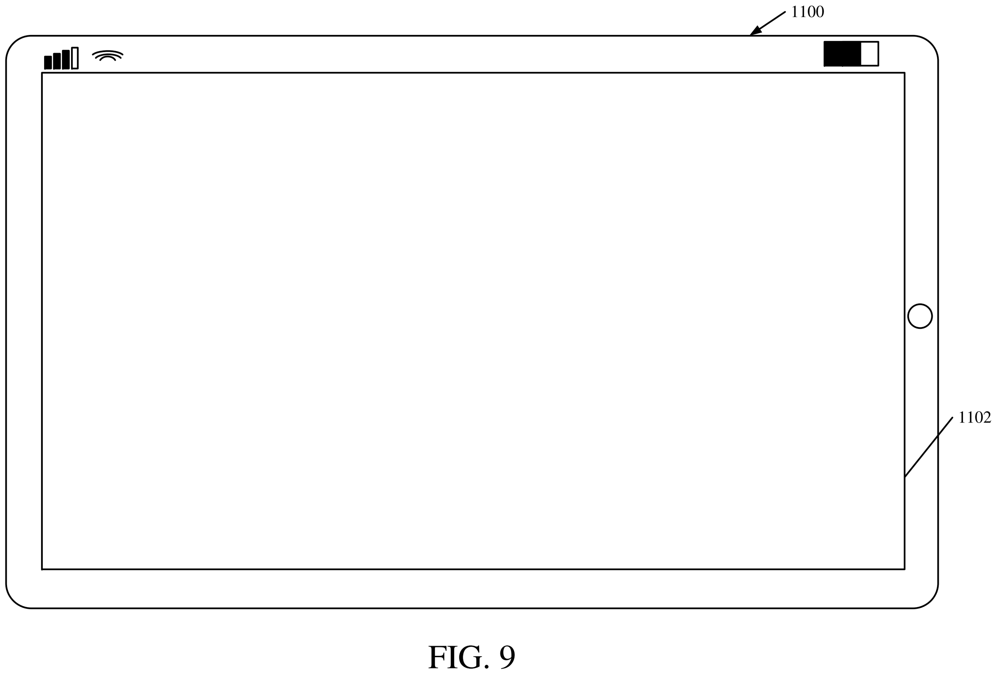

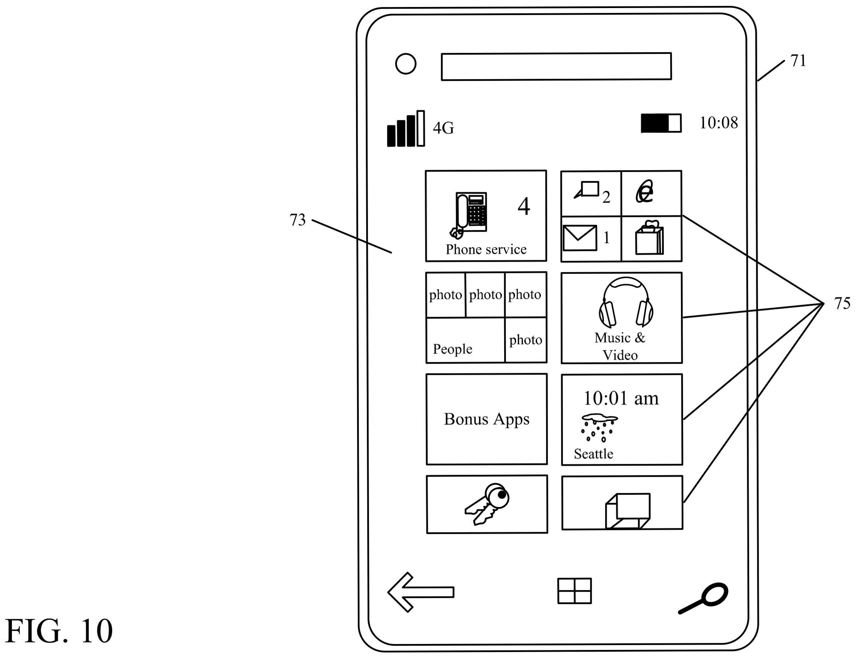

FIG. 8 is a simplified block diagram of one illustrative example of a handheld or mobile computing device that can be used as a user's or client's handheld device 16, in which the present system (or parts of it) can be deployed. For instance, a mobile device can be deployed on (e.g., in the operator compartment of) a mobile machine (e.g., grass mowing vehicle 100) or can be communicably coupled to a mobile machine (e.g., grass mowing vehicle) for use in generating, processing, or displaying the outputs (e.g., 360) discussed above. FIGS. 9 and 10 are examples of handheld or mobile devices.

FIG. 8 provides a general block diagram of the components of a client device 16 that can run some components shown in previous figures, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other figures) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, client system 24, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 9 shows one example in which device 16 is a tablet computer 1100. In FIG. 9, computer 1100 is shown with user interface display screen 1102. Screen 1102 can be a touch screen or a pen-enabled interface that receives inputs from a pen or stylus. Tablet computer 1100 can also use an on-screen virtual keyboard. Of course, computer 1100 can also be attached to a keyboard or other user input device through a suitable attachment mechanism, such as a wireless link or USB port, for instance. Computer 1100 can also illustratively receive voice inputs as well.

FIG. 10 is similar to FIG. 9 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

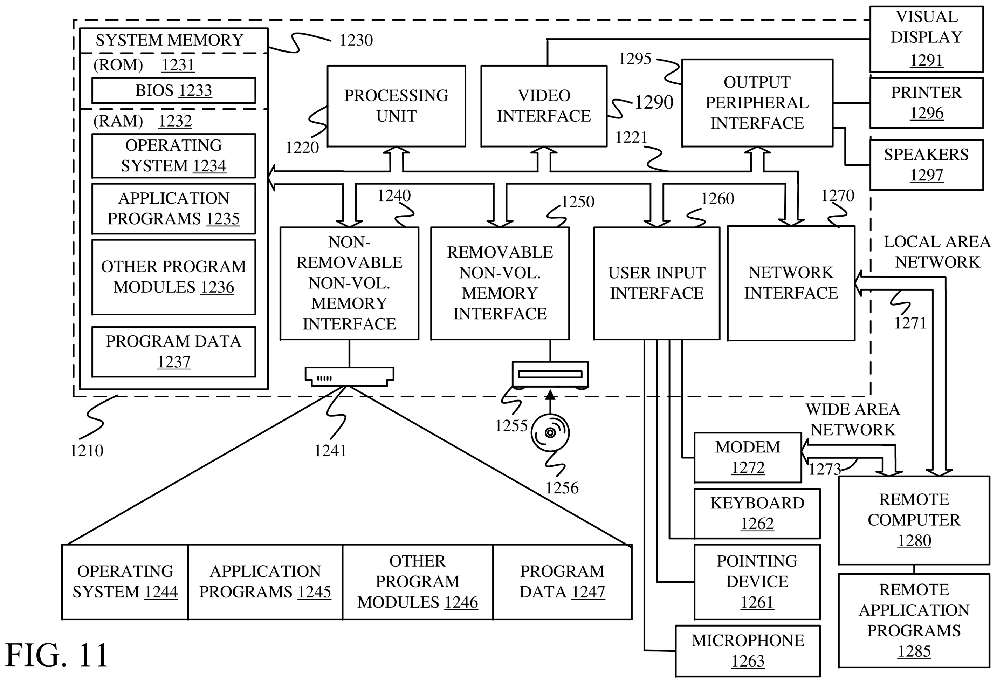

FIG. 11 is one example of a computing environment in which elements of previous figures described herein can be deployed. With reference to FIG. 11, an example system for implementing some embodiments includes a computing device in the form of a computer 1210 programmed to operate as discussed above. Components of computer 1210 can include, but are not limited to, a processing unit 1220 (which can comprise processors or servers from previous figures), a system memory 1230, and a system bus 1221 that couples various system components including the system memory to the processing unit 1220. The system bus 1221 can be any of several types of bus structures including a memory bus or memory controller, a peripheral bus, and a local bus using any of a variety of bus architectures. Memory and programs described with respect to previous figures described herein can be deployed in corresponding portions of FIG. 11.

Computer 1210 typically includes a variety of computer readable media. Computer readable media can be any available media that can be accessed by computer 1210 and includes both volatile and nonvolatile media, removable and non-removable media. By way of example, and not limitation, computer readable media can comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 1210. Communication media can embody computer readable instructions, data structures, program modules or other data in a transport mechanism and includes any information delivery media. The term "modulated data signal" means a signal that has one or more of its characteristics set or changed in such a manner as to encode information in the signal.

The system memory 1230 includes computer storage media in the form of volatile and/or nonvolatile memory or both such as read only memory (ROM) 1231 and random access memory (RAM) 1232. A basic input/output system 1233 (BIOS), containing the basic routines that help to transfer information between elements within computer 1210, such as during start-up, is typically stored in ROM 1231. RAM 1232 typically contains data or program modules or both that are immediately accessible to and/or presently being operated on by processing unit 1220. By way of example, and not limitation, FIG. 11 illustrates operating system 1234, application programs 1235, other program modules 1236, and program data 1237.

The computer 1210 can also include other removable/non-removable volatile/nonvolatile computer storage media. By way of example only, FIG. 11 illustrates a hard disk drive 1241 that reads from or writes to non-removable, nonvolatile magnetic media, an optical disk drive 1255, and nonvolatile optical disk 1256. The hard disk drive 1241 is typically connected to the system bus 1221 through a non-removable memory interface such as interface 1240, and optical disk drive 1255 are typically connected to the system bus 1221 by a removable memory interface, such as interface 1250.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), quantum computers, etc.

The drives and their associated computer storage media discussed above and illustrated in FIG. 11, provide storage of computer readable instructions, data structures, program modules and other data for the computer 1210. In FIG. 11, for example, hard disk drive 1241 is illustrated as storing operating system 1244, application programs 1245, other program modules 1246, and program data 1247. Note that these components can either be the same as or different from operating system 1234, application programs 1235, other program modules 1236, and program data 1237.

A user can enter commands and information into the computer 1210 through input devices such as a keyboard 1262, a microphone 1263, and a pointing device 1261, such as a mouse, trackball or touch pad. Other input devices (not shown) can include a joystick, game pad, satellite dish, scanner, or the like. These and other input devices are often connected to the processing unit 1220 through a user input interface 1260 that is coupled to the system bus, but can be connected by other interface and bus structures. A visual display 1291 or other type of display device is also connected to the system bus 1221 via an interface, such as a video interface 1290. In addition to the monitor, computers can also include other peripheral output devices such as speakers 1297 and printer 1296, which can be connected through an output peripheral interface 1295.

The computer 1210 is operated in a networked environment using logical connections (such as a controller area network - CAN, local area network - LAN, or wide area network WAN) to one or more remote computers, such as a remote computer 1280.

When used in a LAN networking environment, the computer 1210 is connected to the LAN 1271 through a network interface or adapter 1270. When used in a WAN networking environment, the computer 1210 typically includes a modem 1272 or other means for establishing communications over the WAN 1273, such as the Internet. In a networked environment, program modules can be stored in a remote memory storage device. FIG. 11 illustrates, for example, that remote application programs 1285 can reside on remote computer 1280.

## Claims

1. A grass mowing vehicle (100) comprising:
a plurality of ground engaging traction elements (108, 110) moveable to carry the grass mowing vehicle (100) across a worksite (600);
one or more cutting units (104, 106) configured to cut grass at the worksite (600); and
a control system (205) configured to:
generate (832) a path plan (360) for a mowing operation of a plurality of separate mowing areas (604) of a worksite (600), the path plan (360) including a set of respective swaths (606, 608, 610) corresponding to each separate mowing area (604), wherein a subset of swaths (606-1/606-2, 608-1) of a first set of respective swaths (606, 608, 610) are aligned with a subset of swaths (606-2/606-3, 608-2) of a second set of respective swaths (606, 608, 610); and
automatically control (836) the grass mowing vehicle (100) based, at least, on the path plan (360).

2. The grass mowing vehicle (100) of claim 1, wherein the worksite (600) comprises a golf course and wherein the plurality of separate mowing areas (604) comprise a first portion of a golf hole and a second portion of the golf hole.

3. The grass mowing vehicle (100) of claim 1 or 2, wherein the worksite (600) comprises a golf course and wherein the plurality of separate mowing areas (604) comprise a first golf hole and a second golf hole.

4. The grass mowing vehicle (100) of one of the claims 1 to 3, wherein the subset of swaths (606-1/606-2, 608-1) of the first set of respective swaths (606, 608, 610) are aligned in angle with the subset of swaths (606-1/606-2, 608-1) of the second set of respective swaths (606, 608, 610).

5. The grass mowing vehicle (100) of one of the claims 1 to 3, wherein the subset of swaths (606-1/606-2, 608-1) of the first set of respective swaths (606, 608, 610) are aligned in cutting direction with the subset of swaths (606-1/606-2, 608-1) of the second set of respective swaths (606, 608, 610).

6. The grass mowing vehicle (100) of one of the claims 1 to 5, wherein the control system (205) is configured to:
obtain a map of the worksite (600) indicative of boundaries of the plurality of separate mowing areas (604) of the worksite (600);
obtain vehicle data indicative of dimensions of the grass mowing vehicle (100);
obtain operation data indicative of design information for the mowing operation;
calculate an origin of the map of the worksite (600); and
generate the path plan (360) for the mowing operation of the plurality of separate mowing areas (604) of the worksite (600) based, at least, on the map of the worksite (600), the vehicle data, the operation data, and the calculated origin.

7. The grass mowing vehicle (100) of claim 6, wherein the vehicle data includes a cutting width of the grass mowing vehicle (100) and wherein the operation data includes swath pattern and swath overlap.

8. The grass mowing vehicle (100) of claim 6 or 7, wherein the origin of the map of the worksite (600) comprises an XY origin of the map of the worksite (600).

9. The grass mowing of vehicle (100) of one of the claims 1 to 8, wherein the path plan (360) further includes a remainder swath for a respective one of the plurality of separate mowing areas (604) and wherein the control system (205) is configured to:
compare a width of a remainder area of the respective one separate mowing area (604) of the plurality of separate mowing areas (604) to a remainder swath threshold;
determine a cutting direction for the remainder swath based on the comparison; and
generate the remainder swath to provide a cutting path for the remainder area based, at least, on the cut direction for the remainder swath.

10. The grass mowing vehicle (100) of one of the claims 1 to 9, wherein the control system (205) is configured to automatically control the grass mowing vehicle (100) based, at least, on the path plan (360) by automatically controlling one or more controllable subsystems of the grass mowing vehicle (100) based, at least, on the path plan (360), wherein the one or more controllable subsystems include:
a steering subsystem controllable to control a heading of the grass mowing vehicle (100);
a propulsion subsystem controllable to control a travel speed of the grass mowing vehicle (100);
a cutting unit orientation subsystem controllable to control an orientation of each of the one or more cutting units; and
a cutting unit actuation subsystem controllable to control movement of cutting functionality of each of the one or more cutting units.

11. A method performed by a grass mowing vehicle (100) according to one of the claims 1 to 10, the method comprising:
generating (832) a path plan (360) for a mowing operation of a plurality of separate mowing areas (604) of a worksite (600), the path plan (360) including a set of respective swaths (606, 608, 610) corresponding to each separate mowing area (604), wherein a subset of swaths (606-1/606-2, 608-1) of a first set of respective swaths (606, 608, 610) are aligned with a subset of swaths (606-2/606-3, 608-2) of a second set of respective swaths (606, 608, 610); and
automatically controlling (836) the grass mowing vehicle (100) based, at least, on the path plan (360).

12. The method of claim 11 and further comprising:
obtaining a map of the worksite (600) indicative of boundaries of the plurality of separate mowing areas (604) of the worksite (600);
obtaining vehicle data indicative of dimensions of the grass mowing vehicle (100);
obtaining operation data indicative of design information for the mowing operation;
calculating an origin of the map of the worksite (600); and
wherein generating the path plan (360) for the mowing operation of the plurality of separate mowing areas (604) of the worksite (600) comprises generating generate the path plan (360) for the mowing operation of the plurality of separate mowing areas (604) of the worksite (600) based, at least, on the map of the worksite (600), the vehicle data, the operation data, and the calculated origin.

13. The method of claim 11 or 12 and further comprising:
comparing a width of a remainder area of a respective one separate mowing area (604) of the plurality of separate mowing areas (604) to a remainder swath threshold;
determining a cutting direction for a remainder swath for the remainder area based on the comparison; and
wherein generating the path plan (360) for the mowing operation of the plurality of separate mowing areas (604) of the worksite (600) comprises generating generate the path plan (360) for the mowing operation of the plurality of separate mowing areas (604) of the worksite (600) further including the remainder swath.

14. The method of one of the claims 11 to 13, wherein automatically controlling the grass mowing vehicle (100) based, at least, on the path plan (360) comprises automatically controlling one or more controllable subsystems of the grass mowing vehicle (100) based, at least, on the path plan (360).

15. The method of one of the claims 11 to 14, wherein automatically controlling the grass mowing vehicle (100) based, at least, on the path plan (360) comprises automatically controlling an interface mechanism of the grass mowing vehicle (100) based, at least, on the path plan (360).
